# EUROPÄISCHE PATENTSCHRIFT

(11) **EP 2 333 924 B1**
(45) Veröffentlichungstag und Bekanntmachung des Hinweises auf die Patenterteilung: **07.05.2014**
(21) Anmeldenummer: 10188969.9
(22) Anmeldetag: 27.10.2010
(51) Int. Cl.: H02G 3/22, H02G 15/013

(54) **Wanddurchführung zur Durchführung von Kabeln, Kabelschutzrohren oder sonstigen Leitungen**
Wall bushing for feeding through cables, cable protection tubes or other conduits
Passage mural pour le passage de câbles, de tuyaux de protection de câbles ou autres conduites

(30) Priorität: 11.12.2009 DE 102009057900
(43) Veröffentlichungstag der Anmeldung: 15.06.2011
(73) Patentinhaber: gabo Systemtechnik GmbH, 94559 Niederwinkling (DE)
(72) Erfinder: Geiger, Alexander, 94559, Niederwinkling (DE); Lederer, Roland, 94374, Schwarzach (DE); Karl, Markus, 94327, Bogen (DE)
(74) Vertreter: Cohausz & Florack

(56) Entgegenhaltungen:
- DE-B3-102004 056 859
- DE-U1- 20 210 296
- DE-U1- 29 900 087
- US-B1- 6 580 029

## Beschreibung

Die Erfindung betrifft eine Wanddurchführung zur Durchführung von Kabeln, Kabelschutzrohren oder sonstigen Leitungen durch eine Gebäudewand, insbesondere Gebäudeaußenwand, mit einem Außenteil, das einen Grundkörper und eine lösbare Abdeckung aufweist, wobei der Grundkörper mit der Abdeckung einen Hohlraum definiert und einen gegenüber seiner Längsachse abgewinkelten Rohrstutzen zur Anordnung in einer zylindrischen Wanddurchgangsöffnung aufweist, und wobei in dem Hohlraum ein muffenartiges Verbindungselement zur gasdichten Verbindung mindestens zweier Kabel-, Rohr- oder Leitungsenden angeordnet ist.

Derartige Wanddurchführungen bzw. Hauseinführungen sind an sich bekannt. Sie werden insbesondere zur Durchführung von Kabelschutzrohren für Glasfaserkabel durch eine Gebäudeaußenwand verwendet.

Eine aus der Praxis bekannte, von der Firma Prysmian Telecom Cables & Systems UK Ltd. vertriebene Hauseinführung für Glasfaserkabel umfasst ein Außenteil, ein Innenteil und ein innerhalb einer Wanddurchgangsöffnung anzuordnendes Schutzrohr. Zur Montage dieser Wanddurchführung (Hauseinführung) wird zunächst an einer geeigneten Stelle einer Gebäudeaußenwand eine Wanddurchgangsöffnung in Form einer Bohrung mit einem bestimmten Innendurchmesser hergestellt, in die das entsprechend der Wanddicke abgelängte Schutzrohr eingeführt wird. Das Außenteil besteht aus einem Grundkörper, an dessen Rückseite ein Rohrstutzen zur Einführung in die Wanddurchgangsbohrung angeformt ist, und einer lösbaren Abdeckung, die mit dem Grundkörper einen Hohlraum definiert, in welchem eine Verbindungsmuffe zur gasdichten Verbindung des Endes eines äußeren Glasfaserkabel-Schutzrohres und des Endes eines durch die Wanddurchgangsöffnung geführten inneren Glasfaserkabel-Schutzrohres angeordnet wird. Bevor der Grundkörper an der Gebäudeaußenwand mittels einer Schraube fixiert wird, werden zunächst der Kehlbereich des Rohrstutzens, an dem das in die Wanddurchgangsbohrung eingeführte Schutzrohr zur Anlage kommt, sowie mehrere Befestigungslöcher des Grundkörpers mit einer Abdichtmasse versehen. Ferner wird auf ein das äußere Glasfaserkabel-Schutzrohr ummantelndes Schutzkabel eine Abdichttülle aufgeschoben, die anschließend in eine U-förmige Aufnahme des Grundkörpers eingesetzt wird. Nach der Verbindung der Kabelschutzrohrenden wird die Verbindungsmuffe in den Grundkörper gedrückt und das äußere Schutzkabel mittels eines Kabelbinders an Befestigungslöchern des Grundkörpers fixiert. Das Innenteil umfasst ebenfalls eine lösbare Abdeckung und einen Rohrstutzen. Letzterer weist einen Kabelumlenkbogenabschnitt auf und wird - nachdem Dichtmasse in seinem Kehlbereich ringförmig aufgebracht wurde - in das andere Ende der Wanddurchgangsöffnung gesteckt. Nachdem die Abdeckungen auf den jeweiligen Grundkörper des Außenteils und Innenteils gesetzt wurden, muss schließlich der Hohlraum des Außenteils über eine oben in dessen Abdeckung ausgebildete Öffnung mit einem Zwei-Komponenten-Gießharz ausgefüllt werden, um die miteinander verbundenen Kabelschutzrohre und das darin angeordnete Glasfaserkabel gegenüber Wasser- und Gaseintritt abzudichten. Hierzu wird in die Öffnung der äußeren Abdeckung ein Einfülltrichter gesteckt. Abschließend wird die Einfüllöffnung durch einen Stopfen verschlossen. Die Montage dieser bekannten Hauseinführung ist sehr zeitaufwendig. Es sind relativ viele Arbeitsschritte erforderlich, um eine einwandfreie Abdichtfunktion zu erzielen, wobei jedoch insbesondere das Aufbringen der Dichtmasse sowie das Einfüllen des Gießharzes eine potenzielle Fehlerquelle darstellen. Die Lagerung und Handhabung der vielen Einzelteile und Materialien dieser bekannten Hauseinführung sind unbefriedigend.

Der vorliegenden Erfindung liegt die Aufgabe zugrunde, eine Wanddurchführung der eingangs genannten Art anzugeben, die sich einfach montieren lässt und dabei eine besonders zuverlässige Abdichtfunktion bietet.

Diese Aufgabe wird durch eine Wanddurchführung mit den Merkmalen des Anspruchs 1 gelöst.

Die erfindungsgemäße Wanddurchführung, die auch als oberirdische Hauseinführung bezeichnet werden kann, ist dadurch gekennzeichnet, dass das muffenartige Verbindungselement längs geteilt ist, wobei ein Teil des Verbindungselements fest mit dem Grundkörper verbunden ist, und dass der Rohrstutzen mit einem gummielastischen Formteil zur spritzwasserdichten Abdichtung mindestens eines durch die Gebäudewand geführten Kabels, Kabelschutzrohres oder einer sonstigen Leitung gegenüber der Wanddurchgangsöffnung oder einem darin angeordneten Rohr versehen ist.

Die erfindungsgemäße Wanddurchführung erfordert aufgrund ihres gummielastischen Formteils und des im Außenteil integrierten muffenartigen Verbindungsteils weder ein Aufbringen einer Abdichtmasse noch ein Verfüllen des Außenteils mit Gießharz. Die Montage der erfindungsgemäßen Wanddurchführung ist somit sehr einfach, wobei das im Außenteil integrierte muffenartige Verbindungsteil und das gummielastische Formteil eine einwandfreie Abdichtfunktion sicherstellen.

Eine vorteilhafte Ausgestaltung der erfindungsgemäßen Wanddurchführung ist dadurch gekennzeichnet, dass das muffenartige Verbindungselement zwei Gehäusehälften aufweist, innerhalb derer jeweils ein Dichtungsformteil angeordnet ist, wobei eine der Gehäusehälften einstückig mit dem Grundkörper des Außenteils verbunden ist, und wobei die Gehäusehälften im zusammengesetzten Zustand Schwalbenschwanz-Führungen bilden und mittels daran geführter Verbindungsklammern gegeneinander verspannbar sind. Das dergestalt ausgeführte Verbindungselement lässt sich ohne Werkzeuge handhaben, wobei auch die nicht einstückig mit dem Grundkörper verbundene Gehäusehälfte in dem Außenteil vormontiert zur Montage bereitgestellt werden kann. Insbesondere bietet diese Ausgestaltung den Vorteil, dass sie eine optische Kontrolle ermöglicht, ob eine einwandfreie gasdichte Verbindung der Kabelenden vorliegt oder nicht vorliegt. Denn die Gehäusehälften mit den Schwalbenschwanz-Führungen und die Verbindungsklammern sind vorzugsweise so aufeinander abgestimmt, dass die Stirnseiten der Verbindungsklammern in der Montagesollposition im Wesentlichen bündig mit den Enden der Schwalbenschwanz-Führungen abschließen. Stehen die aufgeschobenen Klammern gegenüber den Enden der Schwalbenschwanz-Führungen vor, so ist die Abdichtwirkung möglicherweise nicht ausreichend. Schließen die Stirnseiten der Verbindungsklammern dagegen im Wesentlichen bündig mit den Enden der Schwalbenschwanz-Führungen ab, so liegt die Montagesollposition und damit eine einwandfreie Abdichtwirkung vor, was sich durch Inaugenscheinnahme sowie durch Abtasten einfach kontrollieren lässt.

Eine weitere vorteilhafte Ausgestaltung der erfindungsgemäßen Wanddurchführung besteht darin, dass die jeweilige Verbindungsklammer an ihrer Außenseite rippenförmige Vorsprünge aufweist, wobei die Abdeckung an ihrer Innenseite mindestens zwei axial zueinander beabstandete Klemmvorsprünge aufweist, die im montierten Zustand der Abdeckung die Verbindungsklammern des muffenartigen Verbindungselements dergestalt umgreifen, dass zwischen den rippenförmigen Vorsprüngen der jeweiligen Verbindungsklammer jeweils einer der Klemmvorsprünge angeordnet ist. Die rippenförmigen Vorsprünge stellen nicht nur eine rutschfeste Angriffsfläche für die Handhabung der Verbindungsklammer dar; sie dienen in Kombination mit der Abdeckung und deren Klemmvorsprünge auch zur axialen Verriegelung der Verbindungsklammern an den Gehäusehälften der Verbindungsmuffe.

Nach einer weiteren vorteilhaften Ausgestaltung der erfindungsgemäßen Wanddurchführung ist zwischen dem Rohrstutzen und dem fest mit dem Grundkörper verbundenen Teil des Verbindungselements ein Umlenkbogenelement vorgesehen, wobei der Rohrstutzen einen sich in Richtung Umlenkbogenelement erweiternden Mündungs- und Umlenkungsbereich aufweist. Die Länge des Mündungs- und Umlenkungsbereiches des Rohrstutzens beträgt dabei vorzugsweise mindestens das 1,5-fache des Innendurchmessers des Rohrstutzens. Hierdurch wird eine geführte Umlenkung der Leitung erzielt, ohne dass deren zulässiger Biegeradius unterschritten wird, wobei die Umlenkung der Leitung bereits innerhalb des Rohrstutzens beginnt und somit eine erhebliche Raumersparnis durch geringeren Platzbedarf vor der Gebäudeaußenwand erzielt wird.

Um die Montage der gasdicht zu verbindenden Rohr- bzw. Leitungsenden weiter zu erleichtern und einen bestimmten Verlauf der Rohre oder Leitungen innerhalb des Außenteils möglichst toleranzarm festzulegen, sieht eine weitere bevorzugte Ausgestaltung der erfindungsgemäßen Wanddurchführung vor, dass der Grundkörper klammerartige Kabel- oder Rohrhalterungen aufweist, die an oder benachbart den axialen Enden des fest mit dem Grundkörper verbundenen Teils des muffenartigen Verbindungselements angeordnet sind.

Eine weitere vorteilhafte Ausgestaltung der erfindungsgemäßen Wanddurchführung besteht darin, dass das gummielastische Formteil hülsenförmig ausgebildet ist und einen dem Grundkörper zugewandten konischen Bund aufweist, wobei der Grundkörper am Übergang zu dem Rohrstutzen eine im Wesentlichen ringförmige Anlagefläche für den Bund aufweist. Hierdurch lässt sich eine sehr zuverlässige spritzwasserdichte Abdichtung des durch die Gebäudeaußenwand geführten Kabels im Bereich der außenseitigen Mündung der Wanddurchgangsöffnung erzielen. Die spritzwasserdichte Abdichtung ist besonders zuverlässig, wenn nach einer weiteren Ausgestaltung in der Rückseite des Grundkörpers am Übergang zu dem Rohrstutzen eine denselben umgebende Ringnut ausgebildet ist, in die der konische Bund des gummielastischen Formteils eingreifen kann.

Weitere bevorzugte und vorteilhafte Ausgestaltungen der erfindungsgemäßen Wanddurchführung sind in den Unteransprüchen angegeben.

Nachfolgend wird die Erfindung anhand einer ein Ausführungsbeispiel darstellenden Zeichnung näher erläutert. Es zeigen:
- Fig. 1: eine Vertikalschnittansicht durch einen Abschnitt einer Gebäudeaußenwand mit einer erfindungsgemäßen Wanddurchführung, wobei einem Außenteil und einem Innenteil zugeordnete Abdeckungen explosionsartig getrennt dargestellt sind;
- Fig. 2: eine perspektivische Explosionsdarstellung des Außenteils der Wanddurchführung der Fig. 1;
- Fig. 3: eine perspektivische Explosionsdarstellung des Innenteils der Wanddurchführung der Fig. 1;
- Fig. 4: eine Längsschnittansicht des Innenteils;
- Fig. 5: eine Längsschnittansicht eines gummielastischen Formteils des Außenteils;
- Fig. 6: eine Längsschnittansicht der Abdeckung des Außenteils; und
- Fig. 7: eine Querschnittansicht der Abdeckung der Fig. 6.

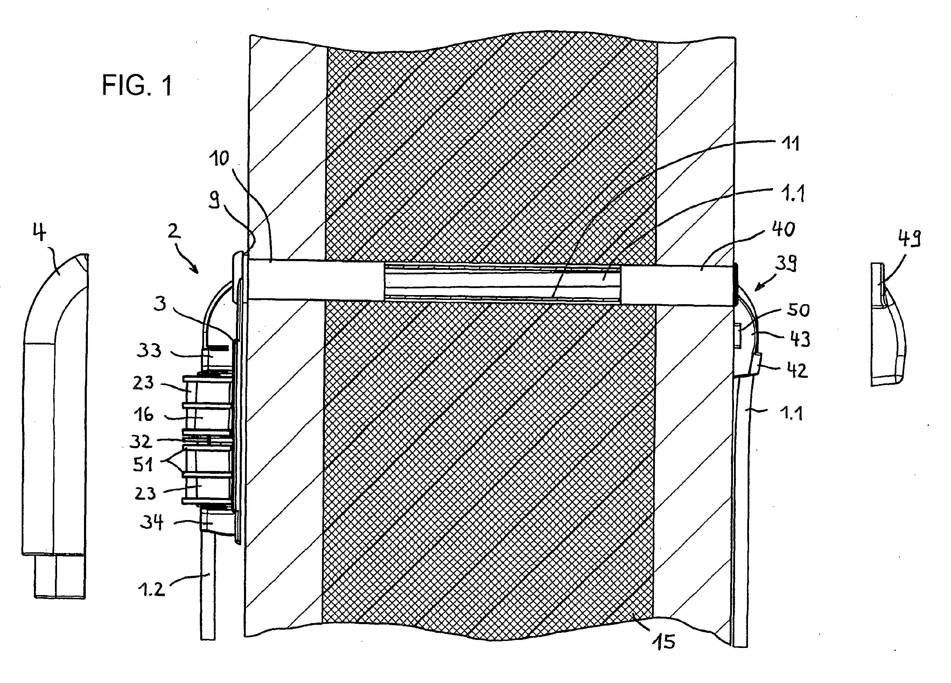

In Figur 1 ist ein oberirdischer Abschnitt einer Gebäudeaußenwand in vertikaler Schnittansicht dargestellt. In die Wand ist eine zylindrische Wanddurchgangsöffnung bzw. Durchgangsbohrung eingebracht, die mit einer Wanddurchführung bzw. Hauseinführung versehen ist. Die Wanddurchführung ist insbesondere zur Durchführung eines durch ein Kabelschutzrohr 1.1 geschützten Glasfaserkabels durch eine oberirdische Gebäudeaußenwand bestimmt. Bei dem Kabelschutzrohr 1.1 handelt es sich um ein flexibles Kunststoffrohr.

Die Wanddurchführung bzw. oberirdische Hauseinführung umfasst ein Außenteil 2, das einen Grundkörper 3 und eine lösbare Abdeckung 4 aufweist. Der Grundkörper 3 besitzt eine plattenförmige Basis 5, von deren Rückseite ein in der Wanddurchgangsöffnung anzuordnender Rohrstutzen 6 absteht. Der Rohrstutzen 6 ist einstückig an dem Grundkörper 3 angeformt und gegenüber dessen Längsachse bzw. der Ebene der plattenförmigen Basis 5 um ca. 90° abgewinkelt. An der Außenseite des Rohrstutzens 6 sind parallel zueinander verlaufende, gleichmäßig über den Umfang verteilt angeordnete Längsrippen 7 ausgebildet.

Die plattenförmige Basis 5 des Grundkörpers 3 weist im Bereich des Rohrstutzens 6 eine im Wesentlichen ringförmige Anlagefläche 8 auf. In die Rückseite der Basis 5 ist am Übergang zu dem Rohrstutzen 6 eine den Rohrstutzen umgebende Ringnut 9 ausgebildet.

Der Rohrstutzen 6 wird in ein hülsenförmiges Formteil 10 aus gummielastischem Material eingesteckt. Das gummielastische Formteil 10 dient der spritzwasserdichten Abdichtung eines durch die Gebäudewand geführten Kabelschutzrohres 1.1 oder einer sonstigen Leitung gegenüber der Wanddurchgangsöffnung bzw. einem in die Wanddurchgangsöffnung eingesteckten Schutzrohr 11.

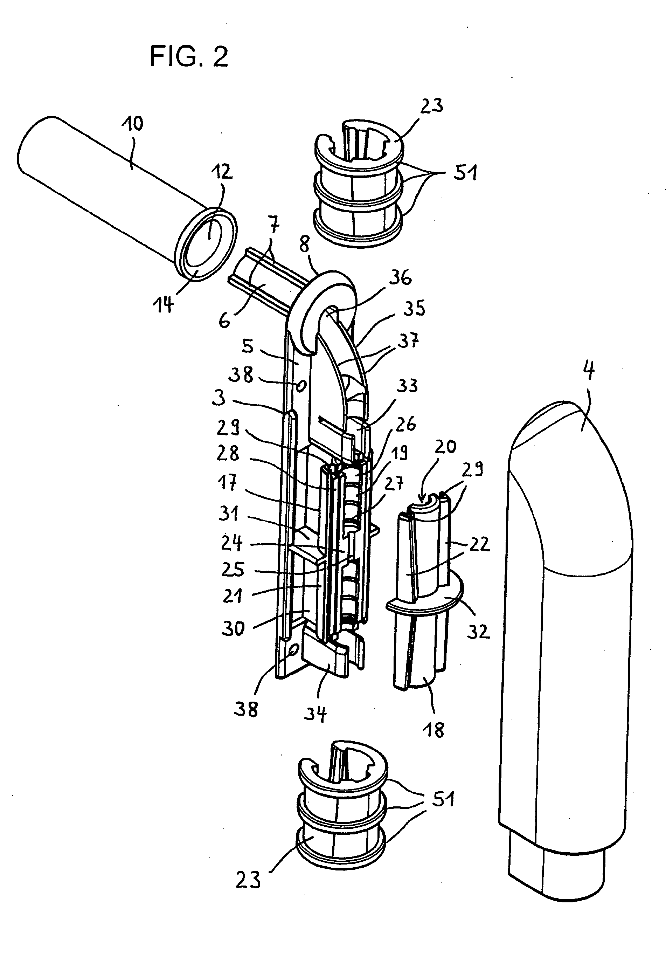

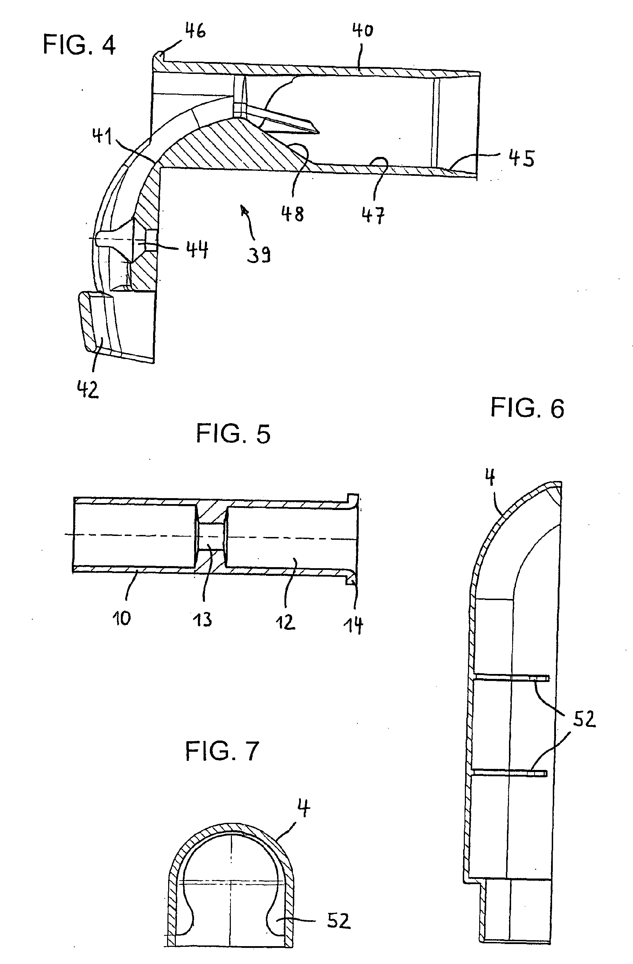

Das Gummi-Formteil 10 besitzt hierzu einen zylindrischen Durchgangskanal 12 mit einer radialen Verengung (Einengung) 13 (vgl. Fig. 5). Der Durchmesser der Verengung 13 ist kleiner als der Nennaußendurchmesser des dort hindurch zu führenden, aus Kunststoff gefertigten Kabelschutzrohres 1.1. Die axiale Länge der Verengung 13 entspricht in etwa dem Durchmesser der Verengung 13. Des Weiteren weist das Gummi-Formteil 10 einen dem Grundkörper zugewandten Bund 14 auf, der im montierten Zustand an der ringförmigen Anlagefläche 8 des Grundkörpers 3 anliegt. Um eine zuverlässige spritzwasserdichte Abdichtung sicherzustellen, ist der Bund 14 konisch ausgeführt, wobei sich der Konus ausgehend vom zylindrischen Durchgangskanal 12 zu dem dem Grundkörper 3 zugewandeten Ende des Gummi-Formteils 10 hin trichterartig weitet (vgl. Fig. 2).

Der Innendurchmesser der Wanddurchgangsöffnung bzw. -bohrung wird etwas größer als der Außendurchmesser des hülsenförmigen Gummi-Formteils 10 und kleiner als der Außendurchmesser des Bundes 14 gewählt. Bei einem Formteil-Außendurchmesser von beispielsweise 19,5 mm sollte der Innendurchmesser der Wanddurchgangsöffnung bzw. -bohrung vorzugsweise ca. 20 mm betragen. Der Außendurchmesser des Bundes 14 kann dann beispielsweise ca. 24 mm betragen.

In dem dargestellten Ausführungsbeispiel weist die Gebäudeaußenwand eine Kernschicht 15 aus Mineralwolle oder einem anderen Wärmedämmmaterial auf. Um zu verhindern, dass in die Dämmmaterialschicht 15 eindringende Nagetiere das durch die Wand hindurchgeführte Kabelrohr 1.1 anfressen, ist das Schutzrohr 11 vorgesehen. Dieses besteht aus widerstandsfähigem Material, beispielsweise aus Metall, vorzugsweise aus Aluminium oder einem mit Kunststoff ummantelten Metallrohr. Der Außendurchmesser des Schutzrohres 11 entspricht dem Innendurchmesser des zylindrischen Durchgangskanals 12 des Gummi-Formteils 10 oder ist geringfügig kleiner als dieser, so dass das Schutzrohr 11 mit einem Endabschnitt formschlüssig in das Gummi-Formteil 10 gesteckt werden kann.

An der Vorderseite der plattenförmigen Basis 5 des Grundkörpers 3 ist ein muffenartiges Verbindungselement 16 angebracht, mittels dem die Enden zweier Kabelschutzrohre 1.1, 1.2 gasdicht miteinander verbunden werden können. Das muffenartige Verbindungselement 16 ist längs geteilt. Es weist zwei rinnenförmigen Gehäusehälften 17, 18 mit halbzylindrischen Aufnahmebereichen auf, innerhalb derer jeweils ein Dichtungsformteil 19, 20 angeordnet ist.

An den Außenseiten der Gehäusehälften 17, 18 sind an die Teilungsflächen angrenzende Führungsstege 21, 22 angeformt. Im zusammengesetzten Zustand der Gehäusehälften 17, 18 bilden die Führungsstege 21, 22 Schwalbenschwanz-Führungen. Mittels daran geführter Verbindungsklammern 23 lassen sich die Gehäusehälften 17, 18 gegeneinander verspannen. Die Verbindungsklammern 23 haben ein im Wesentlichen C-förmiges Querschnittsprofil mit schwalbenschwanzförmigen Längsnuten an der Innenseite.

Das in der Gehäusehälfte aufgenommene Dichtungsformteil 19, 20 ist ebenfalls rinnenförmig ausgebildet und besteht aus gummielastischem Material, beispielsweise aus EPDM oder einem anderen Elastomer. Im mittleren Bereich des Dichtungsformteils 19, 20 ist eine Einengung 24 ausgebildet, die einen rinnenförmigen Kanal 25 definiert. Die beiden rinnenförmigen Dichtungsformteile 19, 20 der Gehäusehälften 17, 28 sind identisch ausgeführt.

An der Innenseite der Rinnen 26 sind radial nach innen vorstehende stegförmige Erhebungen (Wulste) 27 ausgebildet. Der Innenquerschnitt der Rinnen 26 bzw. Erhebungen 27 ist kleiner als der Außendurchmesser eines in dem Verbindungselement 16 aufzunehmenden Kabelschutzrohres 1.2 ausgebildet, um eine gasdichte und zugfeste Verbindung der Kabelschutzrohre 1.1, 1.2 sicherzustellen. Der Innenquerschnitt des rinnenförmigen Kanals 25 der Einengung 24 ist deutlich kleiner als der Außendurchmesser des aufzunehmenden Kabelschutzrohres 1.1, 1.2 und abgestimmt auf das von dem Kabelschutzrohr aufzunehmende Kabel. Hierdurch wird gleichzeitig mit der gasdichten und zugfesten Verbindung der Kabelschutzrohre 1.1, 1.2 ein gasdichter Verschluss zwischen dem innenliegenden Kabel (Glasfaserkabel) und dem Innenquerschnitt des Kabelschutzrohres 1.1, 1.2 in Längsrichtung erreicht.

An den Längsrändern des jeweiligen Dichtungsformteils 19, 20 sind abgewinkelte Stege 28 angeformt, die als Steckleisten dienen. Den Stegen bzw. Steckleisten 28 sind Nuten 29 in der jeweiligen Gehäusehälfte 17, 18 zugeordnet. Die Nuten 29 verlaufen seitlich parallel neben dem rinnenförmigen Aufnahmebereich der Gehäusehälfte 17, 18, in welchem das Dichtungsformteil 19, 20 eingesetzt wird. Sie sind in den Führungsstegen 21, 22 ausgebildet. Die Steckleisten 28 des Dichtungsformteils 19, 20 weisen ein pilzförmiges Querschnittsprofil auf, wobei die Nuten 29 in den Gehäusehälften 17, 18 ein entsprechendes, hinterschnittenes Querschnittsprofil haben. Hierdurch wird das Dichtungsformteil 19, 20 gegen Herausfallen aus der Gehäusehälfte 17, 18 gesichert.

Eine (17) der Gehäusehälften der Verbindungsmuffe 16 ist über einen rückseitigen Längssteg 30 einstückig mit der plattenförmigen Basis 5 des Grundkörpers 3 verbunden. An dieser Gehäusehälfte 17 ist mittig ein radial nach außen ragender Quersteg 31 angeformt. Ebenso ist die andere Gehäusehälfte 18 mittig mit einem radial nach außen ragenden Steg 32 versehen. Die Stege 31, 32 dienen beim Aufschieben der Verbindungsklammern 23 als Gegenlager und Anschlag.

An der Basis 5 des Grundkörpers 3 sind ferner axial beabstandet zu der Verbindungsmuffe 16 klammerartige Kabel- bzw. Rohrhalterungen 33, 34 ausgebildet. Des Weiteren ist zwischen dem Rohrstutzen 6 und der fest mit dem Grundkörper 3 verbundenen Hälfte 17 der Verbindungsmuffe 16 ein Umlenkbogenelement 35 vorgesehen. Der Rohrstutzen 6 weist einen kreiszylindrischen Längskanal und einen sich in Richtung Umlenkbogenelement 35 erweiternden Mündungs- und Umlenkungsbereich 36 auf. Die Länge des Mündungs- und Umlenkungsbereiches 36 beträgt mindestens das 1,5-fache des Innendurchmessers des Rohrstutzens 6. Hierdurch wird erreicht, dass die Umlenkung des Kabelschutzrohes 1.1 bereits innerhalb der Wand beginnt. Der Radius des Umlenkbogenelements 35 beträgt ein Vielfaches des Innendurchmessers des Rohrstutzens 6. Vorzugsweise liegt der Radius des Umlenkbogenelements 35 im Bereich des 2,5 bis 6-fachen des Innendurchmessers des Rohrstutzens 6. Denn Glasfaserkabel und Kunststoffrohre reagieren auf die Unterschreitung bestimmter Mindestbiegeradien äußerst empfindlich. Zudem besitzt das Umlenkbogenelement 35 parallel zueinander verlaufende Flanken 37, die eine halbschalenförmige Rohrführung definieren.

Zur Befestigung des Grundkörpers 3 an der Außenseite einer Gebäudewand sind in der plattenförmigen Basis 5 Befestigungslöcher 38 zur Anbringung von Schrauben oder Nägeln ausgebildet.

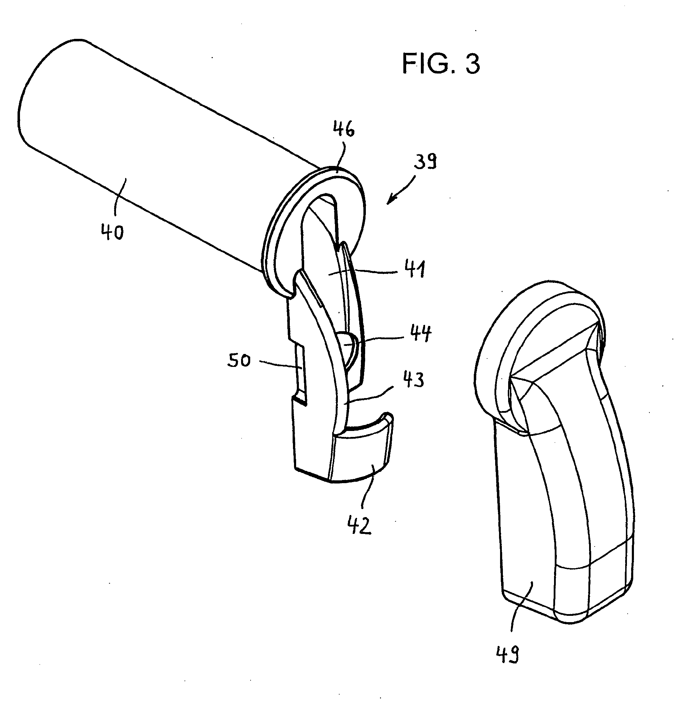

Des Weiteren umfasst die Wanddurchführung (Hauseinführung) ein Innenteil 39 mit einem Rohrstutzen 40 zur Anordnung in dem gegenüberliegenden Ende der zylindrischen Wanddurchgangsöffnung und einen an dem Rohrstutzen 40 angeformten Umlenkbogenabschnitt 41, an dessen Ende eine Kabel- oder Rohrhalterung 42 vorgesehen ist (siehe Figuren 1, 3 und 4). Die Halterung 42 ist hakenförmig ausgebildet. Der Umlenkbogenabschnitt 41 besitzt ferner einseitig eine Flanke 43 zur Führung des flexiblen Kabelschutzrohres 1.1. Zur Befestigung des Innenteils 39 an der Innenseite der Gebäudewand ist in dem Umlenkbogenabschnitt 41 ein Befestigungsloch 44 für eine Senkkopfschraube ausgebildet.

Der Innendurchmesser des Rohrstutzens 40 entspricht dem Innendurchmesser des zylindrischen Durchgangskanals 12 des Gummiformteils 10. Der Rohrstutzen 40 hat allerdings einen sich zu seinem Einführende hin konisch erweiternden Mündungsbereich 45, um das Einführen des Nageschutzrohres 11 in den Rohrstutzen zu erleichtern (vgl. Fig. 4). An seinem dem Einführende gegenüberliegenden Ende besitzt der Rohrstutzen 40 einen Bund 46, der in den Umlenkbogenabschnitt 41 übergeht. Der Außendurchmesser des Bundes 46 entspricht etwa dem Außendurchmesser des Bundes 14 des Gummi-Formteils 10 und ist somit wiederum größer als der Innendurchmesser der Wanddurchgangsöffnung.

Der Umlenkbogenabschnitt 41 ist in den Rohrstutzen 40 hinein verlängert, so dass die Umlenkung des Kabelschutzrohres 1.1 in dem Rohrstutzen 40 und damit in der Gebäudewand beginnt. Ferner ist zwischen dem zylindrischen Innenbereich 47 des Rohrstutzens 40 und dem im Rohrstutzen endenden Umlenkbogenabschnitt 41 ein rampenförmiger Abschnitt 48 ausgebildet, der im Wesentlichen stetig in den zylindrischen Innenbereich 47 sowie den Umlenkbogenabschnitt 41 übergeht.

Das Innenteil 39 umfasst ebenfalls eine abnehmbare schalenförmige Abdeckung 49. Die Abdeckung 49 ist innenseitig mit Rastvorsprüngen versehen, die in Ausnehmungen 50 des Umlenkbogenabschnittes 41 eingreifen können.

Nachdem die Enden der Kabelschutzrohre 1.1, 1.2 mittels des muffenartigen Verbindungselements 16 gasdicht und zugfest miteinander verbunden sind, wird die schalenförmige Abdeckung 4 auf den Grundkörper 3 aufgesetzt. Die Verbindungsklammern 23 weisen an ihrer Außenseite rippenförmige Vorsprünge 51 auf, während die Abdeckung 4 an ihrer Innenseite zwei axial zueinander beabstandete Klemmvorsprünge 52 besitzt, die im montierten Zustand der Abdeckung 4 die Verbindungsklammern 23 derart umgreifen, dass zwischen den rippenförmigen Vorsprüngen 51 jeweils einer der Klemmvorsprünge 52 angeordnet ist.

### Bezugszeichenliste

- 1.1: Kabelschutzrohr
- 1.2: Kabelschutzrohr
- 2: Außenteil
- 3: Grundkörper
- 4: Abdeckung des Außenteils
- 5: plattenförmige Basis
- 6: Rohrstutzen des Außenteils
- 7: Längsrippen
- 8: Anlagefläche
- 9: Ringnut
- 10: Gummi-Formteil
- 11: Schutzrohr (Nageschutzrohr)
- 12: Durchgangskanal
- 13: radiale Verengung
- 14: Bund
- 15: wärmedämmende Kernschicht der Gebäudeaußenwand
- 16: muffenartiges Verbindungselement
- 17: Gehäusehälfte
- 18: Gehäusehälfte
- 19: Dichtungsformteil
- 20: Dichtungsformteil
- 21: Führungssteg
- 22: Führungssteg
- 23: Verbindungsklammer
- 24: Einengung
- 25: rinnenförmiger Kanal
- 26: Rinne
- 27: stegförmige Erhebung (Wulst)
- 28: Steg (Stegleiste)
- 29: Nut
- 30: Längssteg
- 31: Quersteg
- 32: Steg
- 33: Rohrhalterung
- 34: Rohrhalterung
- 35: Umlenkbogenelement
- 36: Mündungs- und Umlenkungsbereich
- 37: Flanke
- 38: Befestigungsloch
- 39: Innenteil
- 40: Rohrstutzen des Innenteils
- 41: Umlenkbogenabschnitt
- 42: Rohrhalterung
- 43: Flanke
- 44: Befestigungsloch
- 45: konischer Mündungsbereich
- 46: Bund
- 47: zylindrischer Innenbereich
- 48: rampenförmiger Abschnitt
- 49: Abdeckung des Innenteils
- 50: Ausnehmung
- 51: rippenförmiger Vorsprung
- 52: Klemmvorsprung

## Patentansprüche

1. Wanddurchführung zur Durchführung von Kabeln, Kabelschutzrohren (1.1, 1.2) oder sonstigen Leitungen durch eine Gebäudewand, insbesondere Gebäudeaußenwand, mit einem einen Grundkörper (3) und eine lösbare Abdeckung (4) aufweisenden Außenteil (2), wobei der Grundkörper mit der Abdeckung einen Hohlraum definiert und einen gegenüber seiner Längsachse abgewinkelten Rohrstutzen (6) zur Anordnung in einer zylindrischen Wanddurchgangsöffnung aufweist, und wobei in dem Hohlraum ein muffenartiges Verbindungselement (16) zur gasdichten Verbindung mindestens zweier Kabel-, Rohr- oder Leitungsenden angeordnet ist, **dadurch gekennzeichnet, dass** das Verbindungselement (16) längs geteilt ist, wobei ein Teil (17) des Verbindungselements (16) fest mit dem Grundkörper (3) verbunden ist, und dass der Rohrstutzen (6) mit einem gummielastischen Formteil (10) zur spritzwasserdichten Abdichtung mindestens eines durch die Gebäudewand geführten Kabels, Kabelschutzrohres (1.1) oder einer sonstigen Leitung gegenüber der Wanddurchgangsöffnung oder einem darin angeordneten Rohr (11) versehen ist.

2. Wanddurchführung nach Anspruch 1, **dadurch gekennzeichnet, dass** das Verbindungselement (16) zwei Gehäusehälften (17, 18) aufweist, innerhalb derer jeweils ein Dichtungsformteil (19, 20) angeordnet ist, wobei eine (17) der Gehäusehälften einstückig mit dem Grundkörper (3) verbunden ist, und wobei die Gehäusehälften (17, 18) im zusammengesetzten Zustand Schwalbenschwanz-Führungen (21, 22) bilden und mittels daran geführter Verbindungsklammern (23) gegeneinander verspannbar sind.

3. Wanddurchführung nach Anspruch 1 oder 2, **dadurch gekennzeichnet, dass** die jeweilige Verbindungsklammer (23) an ihrer Außenseite rippenförmige Vorsprünge (51) aufweist, wobei die Abdeckung (4) an ihrer Innenseite mindestens zwei axial zueinander beabstandete Klemmvorsprünge (52) aufweist, die im montierten Zustand der Abdeckung (4) die Verbindungsklammern (23) des muffenartigen Verbindungselements (16) dergestalt umgreifen, dass zwischen den rippenförmigen Vorsprüngen (51) der jeweiligen Verbindungsklammer (23) jeweils einer der Klemmvorsprünge (52) angeordnet ist.

4. Wanddurchführung nach einem der Ansprüche 1 bis 3, **dadurch gekennzeichnet, dass** zwischen dem Rohrstutzen (6) und dem fest mit dem Grundkörper (3) verbundenen Teil (17) des Verbindungselements (16) ein Umlenkbogenelement (35) vorgesehen ist, wobei der Rohrstutzen (6) einen sich in Richtung Umlenkbogenelement (35) erweiternden Mündungs- und Umlenkungsbereich (36) aufweist.

5. Wanddurchführung nach Anspruch 4, **dadurch gekennzeichnet, dass** die Länge des Mündungs- und Umlenkungsbereiches (36) mindestens das 1,5-fache des Innendurchmessers des Rohrstutzens (6) beträgt.

6. Wanddurchführung nach einem der Ansprüche 1 bis 5, **dadurch gekennzeichnet, dass** der Grundkörper (3) klammerartige Kabel- oder Rohrhalterungen (33, 34) aufweist, die an oder benachbart den axialen Enden des fest mit dem Grundkörper (3) verbundenen Teils (17) des Verbindungselements (16) angeordnet sind.

7. Wanddurchführung nach einem der Ansprüche 1 bis 6, **dadurch gekennzeichnet, dass** das gummielastische Formteil (10) hülsenförmig ausgebildet ist und einen dem Grundkörper (3) zugewandten konischen Bund (14) aufweist, wobei der Grundkörper am Übergang zu dem Rohrstutzen (6) eine im Wesentlichen ringförmige Anlagefläche (8) für den Bund (14) aufweist.

8. Wanddurchführung nach einem der Ansprüche 1 bis 7, **dadurch gekennzeichnet, dass** in der Rückseite des Grundkörpers (3) am Übergang zu dem Rohrstutzen (6) eine denselben umgebende Ringnut (9) ausgebildet ist.

9. Wanddurchführung nach einem der Ansprüche 1 bis 8, **dadurch gekennzeichnet, dass** das gummielastische Formteil (10) einen zylindrischen Durchgangskanal (12) mit einer radialen Verengung (13) aufweist.

10. Wanddurchführung nach einem der Ansprüche 1 bis 9, des Weiteren **gekennzeichnet durch** ein Innenteil (39) mit einem Rohrstutzen (40) zur Anordnung in dem gegenüberliegenden Ende der zylindrischen Wanddurchgangsöffnung und einen an dem Rohrstutzen (40) angeformten Umlenkbogenabschnitt (41), an dessen Ende eine Kabel- oder Rohrhalterung (42) vorgesehen ist.

11. Wanddurchführung nach Anspruch 10, **dadurch gekennzeichnet, dass** der Rohrstutzen (40) einen sich zu seinem Einführende hin konisch erweiternden Mündungsbereich (45) aufweist.

12. Wanddurchführung nach Anspruch 10 oder 11, **dadurch gekennzeichnet, dass** der Umlenkbogenabschnitt (41) in den Rohrstutzen (40) hinein verlängert ist.

13. Wanddurchführung nach einem der Ansprüche 10 bis 12, **dadurch gekennzeichnet, dass** zwischen dem zylindrischen Innenbereich (47) des Rohrstutzens (40) und dem im Rohrstutzen endenden Umlenkbogenabschnitt (41) ein rampenförmiger Abschnitt (48) ausgebildet ist, der stetig in den zylindrischen Innenbereich (47) sowie den Umlenkbogenabschnitt (41) übergeht.

14. Wanddurchführung nach einem der Ansprüche 1 bis 13, des Weiteren **gekennzeichnet durch** ein innerhalb der Wanddurchgangsöffnung anzuordnendes, mit dem gummielastischen Formteil (10) formschlüssig verbindbares Schutzrohr (11).

## Claims

1. Wall bushing for feeding through cables, cable protection tubes (1.1, 1.2) or other conduits through a wall of a building, more particularly an external wall of a building, comprising an external part (2) having a base body (3) and a removable cover (4), the base body defining a cavity together with the cover and comprising a pipe socket (6), which is at an angle relative to the longitudinal axis thereof, for arrangement in a cylindrical wall passage, and a sleeve-type connecting element (16) for the gas-tight connection of at least two cable-, tube- or conduit ends being arranged in the cavity, **characterised in that** the connecting element (16) is divided up longitudinally, a part (17) of the connecting element (16) being rigidly connected to the base body (3), and **in that** the pipe socket (6) is provided with a rubber-elastic moulded part (10) for the splash-proof sealing of at least one cable, cable protection tube (1.1) or other conduit which is guided through the wall of the building with respect to the wall passage or a pipe (11) arranged therein.

2. Wall bushing according to claim 1, **characterised in that** the connecting element (16) comprises two housing halves (17, 18), inside each of which a sealing moulded part (19, 20) is arranged, one (17) of the housing halves being integrally connected to the base body (3), and the housing halves (17, 18) forming dovetail guides (21, 22) when assembled and being able to be braced against each other by means of connecting clamps (23) guided thereon.

3. Wall bushing according to either claim 1 or claim 2, **characterised in that** each connecting clamp (23) comprises rib-shaped projections (51) on the outside thereof, the cover (4) comprising at least two axially spaced apart clamping projections (52) on the inside thereof, which encompass the connecting clamps (23) of the sleeve-type connecting element (16) when the cover (4) is mounted so that one of the clamping projections (52) is arranged between the rib-shaped projections (51) of each connecting clamp (23).

4. Wall bushing according to any of claims 1 to 3, **characterised in that** a deflecting bend element (35) is provided between the pipe socket (6) and the part (17) of the connecting element (16) which is rigidly connected to the base body (3), the pipe socket (6) comprising an outlet and deflection region (36) which widens towards the deflecting bend element (35).

5. Wall bushing according to claim 4, **characterised in that** the length of the outlet and deflection region (36) is at least 1.5 times the inner diameter of the pipe socket (6).

6. Wall bushing according to any of claims 1 to 5, **characterised in that** the base body (3) comprises clamp-type cable- or tube supports (33, 34) which are arranged on or adjacent to the axial ends of the part (17) of the connecting element (16) which is rigidly connected to the base body (3).

7. Wall bushing according to any of claims 1 to 6, **characterised in that** the rubber-elastic moulded part (10) is configured in the shape of a sleeve and comprises a conical flange (14) which faces towards the base body (3), the base body comprising a substantially annular contact face (8) for the flange (14) at the transition to the pipe socket (6).

8. Wall bushing according to any of claims 1 to 7, **characterised in that** an annular groove (9) surrounding the pipe socket (6) is formed in the rear side of the base body (3) at the transition to the pipe socket (6).

9. Wall bushing according to any of claims 1 to 8, **characterised in that** the rubber-elastic moulded part (10) comprises a cylindrical passage (12) having a radial constriction (13).

10. Wall bushing according to any of claims 1 to 9, further **characterised by** an internal part (39) comprising a pipe socket (40) for arrangement in the opposite end of the cylindrical wall passage and a deflecting bend portion (41) formed on the pipe socket (40), on the end of which portion a cable or tube support (42) is provided.

11. Wall bushing according to claim 10, **characterised in that** the pipe socket (40) comprises an outlet region (45) which widens conically towards the insertion end thereof.

12. Wall bushing according to either claim 10 or claim 11, **characterised in that** the deflecting bend portion (41) is extended into the pipe socket (40).

13. Wall bushing according to any of claims 10 to 12, **characterised in that** a ramp-shaped portion (48) is formed between the cylindrical internal region (47) of the pipe socket (40) and the deflecting bend portion (41) ending in the pipe socket, which portion transitions continuously into the cylindrical internal region (47) and the deflecting bend portion (41).

14. Wall bushing according to any of claims 1 to 13, further **characterised by** a protection pipe (11) which is to be arranged inside the wall passage and can be interlockingly connected to the rubber-elastic moulded part (10).

## Revendications

1. Passage mural pour le passage de câbles, de tubes de protection de câbles (1.1,1.2) ou d'autres conduites à travers un mur d'un bâtiment, en particulier d'un mur extérieur, avec une pièce extérieure (2), qui est dotée d'un corps de base (3) et d'un couvercle amovible (4), sachant que le corps de base définit, avec le couvercle, un espace vide et qu'il est doté d'une tubulure (6) coudée par rapport à son axe longitudinal, laquelle est destinée à être installée dans une ouverture cylindrique qui traverse le mur, et sachant que, dans l'espace vide, est disposé un élément de raccordement (16) en forme de manchon, qui est destiné à assurer le raccordement étanche au gaz d'au moins deux extrémités de câble, de tube ou de conduite, **caractérisé en ce que** l'élément de raccordement (16) est divisé dans le sens de la longueur, sachant qu'une partie (17) de l'élément de raccordement (16) est reliée fixement au corps de base (3) et que la tubulure (6) est dotée d'une pièce préformée (10) présentant l'élasticité du caoutchouc, laquelle est destinée à assurer l'étanchéité aux projections d'eau d'au moins un câble, un tube de protection de câble (1.1) ou une conduite quelconque par rapport à l'orifice de passage mural ou d'un tube (11) disposé dans celle-ci.

2. Passage mural selon la revendication 1, **caractérisé en ce que** l'élément de raccordement (16) présente deux moitiés de boîtier (17, 18) à l'intérieur de chacune desquelles est installé une pièce d'étanchéité préformée (19, 20), sachant que l'une (17) des moitiés de boîtier est reliée d'une pièce au corps de base (3), et sachant que les moitiés de boîtier (17, 18), quand elles sont assemblées, forment des guidages en queue d'aronde (21, 22) et peuvent être serrées par rapport l'une à l'autre au moyen de brides de liaison (23).

3. Passage mural selon revendication 1 ou 2, **caractérisé en ce que** chacune des brides de liaison (23) est dotée, sur sa face extérieure, de saillies en forme de nervures (51), sachant que le couvercle (4) présente, sur sa face intérieure, au moins deux saillie de blocage (52), distancées axialement l'une de l'autre, qui, lorsque le couvercle (4) est monté, agrippent les brides de liaison (23) de l'élément de raccordement (16) en forme de manchon, de telle manière que les saillies de blocage (52) se trouvent respectivement disposées entre les saillies en forme de nervures (51).

4. Passage mural selon l'une des revendications 1 à 3, **caractérisé en ce qu'**un élément de déviation courbe (35) est prévu entre la tubulure (6) et la partie (17) de l'élément de raccordement (16) reliée au corps de base (3), sachant que la tubulure (6) est dotée d'une zone d'embouchure et de déviation (36) qui s'élargit dans la direction de l'élément de déviation courbe (35).

5. Passage mural selon la revendication 4, **caractérisé en ce que** la longueur de la zone d'embouchure et de déviation (36) correspond à au moins 1,5 fois le diamètre intérieur de la tubulure (6).

6. Passage mural selon l'une des revendications 1 à 5, **caractérisé en ce que** le corps de base (3) est doté de dispositifs de maintien de câble ou de tube (33, 34), genre colliers, qui sont agencés sur les extrémités axiales de la partie (17) de l'élément de raccordement (16) reliée au corps de base (3) ou à proximité de celles-ci.

7. Passage mural selon l'une des revendications 1 à 6, **caractérisé en ce que** la pièce préformée (10) présentant l'élasticité du caoutchouc est réalisée en forme de douille et est dotée d'un collet conique (14) qui est dirigé vers le corps de base (3), sachant que, dans la zone de raccordement à la tubulure (6), le corps de base est doté, pour le collet (14), d'une surface d'appui (8) sensiblement annulaire.

8. Passage mural selon l'une des revendications 1 à 7, **caractérisé en ce que**, dans la face arrière du corps de base (3), dans la zone de raccordement à la tubulure (6), est formée une rainure annulaire (9) qui entoure celui-ci.

9. Passage mural selon l'une des revendications 1 à 8, **caractérisé en ce que** la pièce préformée (10) présentant l'élasticité du caoutchouc est dotée d'un canal de passage cylindrique (12) qui présente un rétrécissement radial (13).

10. Passage mural selon l'une des revendications 1 à 9, **caractérisé de plus par** une pièce intérieure (39), dotée d'une tubulure (40), qui est destinée à être installée dans l'extrémité opposée de l'orifice de passage mural cylindrique, et par une section de déviation courbe (41), formée sur la tubulure (40), à l'extrémité de laquelle est prévu un dispositif de maintien de câble ou de tube (42).

11. Passage mural selon la revendication 10, **caractérisé en ce que** la tubulure (40) est dotée d'une section d'embouchure (45) qui s'élargit en forme de cône vers son extrémité d'entrée.

12. Passage mural selon revendication 10 ou 11, **caractérisé en ce que** la zone de déviation courbe (41) est prolongée à l'intérieur de la tubulure (40).

13. Passage mural selon l'une des revendications 10 à 12, **caractérisé en ce que**, entre la zone intérieure, cylindrique (47) de la tubulure (40) et la zone de déviation courbe (41) se terminant dans la tubulure, est prévue une section en forme de rampe (48), qui se change en continu en la zone intérieure, cylindrique (47) ainsi en la zone de déviation courbe (41).

14. Passage mural selon l'une des revendications 1 à 13, **caractérisé de plus par** un tube de protection (11), qui, devant être disposé à l'intérieur de l'orifice de passage mural, peut être raccordé par emboîtement à la pièce préformée (10).
